# EUROPÄISCHE PATENTSCHRIFT

(11) **EP 3 928 981 B1**
(45) Veröffentlichungstag und Bekanntmachung des Hinweises auf die Patenterteilung: **28.12.2022**
(21) Anmeldenummer: 21175857.8
(22) Anmeldetag: 26.05.2021
(51) Int. Cl.: B33Y 10/00, B33Y 30/00, B33Y 70/10, A61C 13/00, A61C 13/34

(54) **VERFAHREN ZUM HERSTELLEN EINES KIEFER-ZAHN-MODELLS SOWIE DRUCKANLAGE HIERFÜR**
METHOD FOR PRODUCING A JAW-TOOTH MODEL AND PRINTING SYSTEM FOR SAME
PROCÉDÉ DE FABRICATION D'UN MODÈLE À DENT DE MÂCHOIRE ET SYSTÈME D'IMPRESSION CORRESPONDANT

(30) Priorität: 26.06.2020 DE 102020116720
(43) Veröffentlichungstag der Anmeldung: 29.12.2021
(73) Patentinhaber: Born, Christian, 16356 Ahrensfelde (DE); Bernhardt, Volker, 13507 Berlin (DE)
(72) Erfinder: Born, Christian, 16356 Ahrensfelde (DE); Bernhardt, Volker, 13507 Berlin (DE)
(74) Vertreter: Wunderlich & Heim Patentanwälte Partnerschaftsgesellschaft mbB

(56) Entgegenhaltungen:
- EP-A1- 3 045 498
- US-A1- 2014 162 233

## Beschreibung

Die Erfindung betrifft ein Verfahren zum Herstellen eines Kiefer-Zahn-Modells, wobei ein digitaler Datensatz zu einem Kiefer mit oder ohne Zähnen vorliegt. Ferner betrifft die Erfindung eine 3D-Druckanlage zum Herstellen eines Kiefer-Zahn-Modells.

In der Zahnmedizin beziehungsweise der Zahntechnik, beispielsweise beim Herstellen von Spangen oder größeren Implantaten, ist es üblich, ein Gipsmodell eines Kiefers mit oder ohne Zähne zu erstellen. Zumindest in Deutschland werden auch durch die Vorgaben zur Abrechnungspraxis mit den Krankenkassen derartige Gipsmodelle als Vorstufe gefordert.

Das Erstellen eines Gipsmodells ist jedoch relativ aufwendig. Zuerst muss ein Negativ des Kiefers mit den entsprechenden Zähnen oder Zahnlücken als Abdruck erstellt werden, indem der Unterkiefer- beziehungsweise der Oberkieferbereich in eine entsprechende Form gepresst wird. Basierend auf dieser Form wird anschließend ein Gipsmodell als Positiv hergestellt, welches unter Umständen noch nachgebessert werden muss.

Dieses Verfahren ist umständlich und aufwändig. US 2014/162233 A1 offenbart ein Verfahren zum Herstellen eines Kiefer-Zahn-Modells mit den Merkmalen des Oberbegriffs des Anspruchs 1 sowie eine 3D-Druckanlage.

Der Erfindung liegt daher die **Aufgabe** zugrunde, das Herstellen eines Kiefer-Zahn-Modells zu vereinfachen.

Diese Aufgabe wird erfindungsgemäß durch ein Verfahren zum Herstellen eines Kiefer-Zahn-Modells mit den Merkmalen des Anspruchs 1 sowie mit einer 3D-Druckanlage mit den Merkmalen des Anspruchs 9 gelöst.

Vorteilhafte Ausführungsformen der Erfindung sind in den Unteransprüchen und der Beschreibung angegeben.

Entsprechend der Erfindung ist vorgesehen, dass der digitale Datensatz für ein Fused Deposition Modeling Verfahren in einem 3D-Drucker aufbereitet wird und das Kiefer-Zahn-Modell mittels Fused Deposition Modeling mittels einem 3D-Drucker hergestellt wird. Zum 3D-Drucken wird ein Gipsfilament verwendet. Ferner wird der Düsendurchmesser der Druckdüse des 3D-Druckers zwischen 0,2 mm und 0,6 mm gewählt.

Der digitale Datensatz, welcher entsprechend dem erfindungsgemäßen Verfahren verwendet wird, kann beispielsweise mittels eines digitalen Bildes aus einem Modellscanner oder Daten eines Intraoral-Scanneres erzeugt werden und kann den gesamten Kiefer oder auch Teile davon umfassen. Dieser Datensatz wird anschließend entsprechend aufgearbeitet, sodass er für ein Fused Deposition Modeling Verfahren, welches auch als Fused Filament Fabrication Verfahren bezeichnet wird, verwendet werden kann. Hierunter wird im Sinne der Erfindung insbesondere verstanden, dass das 3D-Modell entsprechend in einzelne Schichten zerlegt wird, welche von den Abmaßen geeignet sind durch einen 3D-Drucker hergestellt zu werden, der ein Gipsfilament verwendet. Hierbei ist beispielsweise zu berücksichtigen, dass der Düsendurchmesser deutlich größer ausfällt als normalerweise bei 3D-Druckern, da Gips im Gegensatz zu Kunststoffen nicht schmelzbar ist und somit zumindest teilweise seine Körnung behält.

Der Grundgedanke der Erfindung kann darin gesehen werden, moderne Fertigungsverfahren wie 3D-Drucken, insbesondere Fused Deposition Modeling zur Produktion eines Kiefer-Zahn-Modells aus Gips zu verwenden. Hierbei ist es notwendig, entsprechende Adaptionen durchzuführen, da normalerweise 3D-Druckverfahren meist mit Kunststoff durchgeführt werden.

3D-Druckverfahren, werden auch als additive Fertigungsverfahren bezeichnet. Hierunter werden insbesondere Verfahren verstanden, bei denen durch ein Auftragen von Materialschicht auf Materialschicht drei-dimensionale Gegenstände, ein so genanntes Werkstück, hergestellt werden können. Es sind verschiedene Verfahren bekannt. Eines dieser Verfahren wird als Fused Filament Fabrication (FFF), Fused Deposition Modeling (FDM) oder auch Schmelzschichtung bezeichnet, bei dem das Werkstück schichtweise aus einem schmelzfähigen Kunststoff oder beispielsweise auch aus anderen schmelzfähigen oder bedingt schmelzfähigen Materialien aufgebaut wird. Bei diesem Verfahren wird in ähnlicher Weise wie beim normalen Drucken ein Raster aus aufgeschmolzenen Punkten auf eine Fläche aufgebracht. Das Material, welches hierzu verwendet wird, wird dem 3D-Drucker meist in drahtähnlicher Form, als sogenanntes Filament, zugeführt, im 3D-Drucker erwärmt und mittels einer Düse extrudiert.

Der Vorteil des erfindungsgemäßen Verfahrens ist, dass keine Negativform mehr angefertigt werden muss, welche im herkömmlichen Herstellungsverfahren des Gipsmodells verwendet wurden. Diese können nicht mehrmals oder nur eine beschränkte Anzahl von Malen verwendet werden. Dies ist entsprechend des erfindungsgemäßen Verfahrens unproblematischer, da der Druck jedes Mal neu erzeugt werden kann, selbst wenn ein vorhergehendes Gipsmodell zerstört wurde.

Bevorzugt weist das Gipsfilament zwischen 5% bis 50% Gips auf. Zusätzlich kann das Gipsfilament Kunststoff beispielsweise PLA (Polylactid), PET (Polyethylenterephthalat) oder PET-G (Polyethylenterephthalat-Glycol) aufweisen. Auch PLA-Blends wie beispielsweise PLA und Terratech Flex oder PLA und BioPBS FD92PM beziehungsweise BIoPBS FZ91PM sind möglich.

Eine derartige Kombination von Gips und Kunststoff hat sich als besonders vorteilhaft herausgestellt, da hiermit zum einen ein effizientes und schnelles sowie hoch genaues 3D-Drucken möglich ist, zum anderen immer noch die Voraussetzungen eines klassischen Gipsmodells gegeben sind, so dass dieses auch in dem bekannten Verfahren weiter ver- und bearbeitet werden kann. Dies bedeutet insbesondere, dass die bekannten Arbeitsverläufe nicht angepasst werden und bestehende Workflows aufrechterhalten werden können.

Grundsätzlich kann der Gips eine beliebige Körnung aufweisen. Vorteilhaft ist es, wenn der Gips im Gipsfilament eine Körnung zwischen 0,01 mm und 0,05 mm aufweist. Es hat sich herausgestellt, dass eine derartige Körnung optimal mit dem angegebenen Düsendurchmesser interagiert. Das heißt, dass die Düse nicht verstopft und dennoch eine ausreichend grobe Körnung vorhanden ist.

Bevorzugt ist es, wenn die minimale Schichthöhe bei der Aufbereitung des digitalen Datensatzes für das Fused Deposition Modeling Verfahren in dem 3D-Drucker 0,1 mm beträgt. Eine derartige Schichthöhe ist ein guter Kompromiss zwischen einem effizienten Produktionsverfahren und einer ausreichend hohen Genauigkeit, so dass das entstehende Gipsmodell anschließend ohne weitere Nachbearbeitung oder im Wesentlichen ohne diese verwendet werden kann.

Ferner bietet sich der große Vorteil gegenüber dem herkömmlichen Abformverfahren an, dass an dem digitalen Datensatz vor dem Aufbereiten für das Fused Deposition Modeling Verfahren in dem 3D-Drucker Manipulationen beispielsweise eine Zahnverschiebung durchgeführt werden kann. Hierdurch ergeben sich noch größere Anwendungsmöglichkeiten, da auch bereits eventuell parallel auftretende Veränderungen im Kiefer-Zahn-Bereich vorab berücksichtigt werden können.

Grundsätzlich kann das entstehende Gipsmodell komplett aus Gips bestehen. Vorteilhaft ist es jedoch, wenn, basierend auf dem digitalen Datensatz eine Sockelform aus mehreren verschiedenartig geformten Sockelformen ausgewählt wird und anschließend das Fused Deposition Modeling Verfahren direkt auf den Sockel ausgeführt wird oder der Sockel mit gedruckt wird. Somit liegt eine gute Basis vor, auf der mittels des Gipsfilaments das Gipsmodell aufgebaut werden kann. Die gewählte Sockelform spiegelt dabei die Größe und ungefähre Dimensionierung eines Kiefers dar, so dass mit diesem Verfahren beispielsweise auch für Kinder und Jugendliche wie Erwachsene Gipsmodelle erstellt werden können.

Abschließend betrifft die Erfindung eine 3D-Druckanlage zum Herstellen eines Kiefer-Zahn-Modells zum Durchführen des erfindungsgemäßen Verfahrens.

Diese 3D-Druckanlage kann hierfür zum einen eine Recheneinheit, die ausgestaltet ist, einen digitale Datensatz zu einem Kiefer mit oder ohne Zähnen für ein Fused Deposition Modeling Verfahren in einem 3D-Drucker aufzubereiten und zum andern einem 3D-Drucker aufweisen, der einen Düsendurchmesser zwischen 0,2 mm und 0,6 mm besitzt und zur Verwendung eines Gips-Filament ausgestaltet ist. Der 3D-Drucker ist entsprechend ausgebildet basierend auf dem aufbereiteten Datensatz ein Gipsmodell des Kiefer-Zahn-Modelles zu drucken.

Mit dem erfindungsgemäßen Verfahren und der erfindungsgemäßen Druckanlage ist es somit möglich Gipsmodell des Kiefer-Zahn-Modelles einfach herzustellen.

## Patentansprüche

1. Verfahren zum Herstellen eines Kiefer-Zahn-Modells
wobei ein digitaler Datensatz zu einem Kiefer mit oder ohne Zähnen vorliegt,
wobei der digitale Datensatz für ein Fused Deposition Modeling Verfahren in einem 3D-Drucker aufbereitet wird,
wobei das Kiefer-Zahn-Modell mittels Fused Deposition Modeling mittels einem 3D-Drucker hergestellt wird, **dadurch gekennzeichnet,**
**dass** ein Gips-Filament verwendet wird, und
**dass** der Düsendurchmesser einer Druckdüse des 3D-Druckers zwischen 0,2 mm und 0,6 mm gewählt wird.

2. Verfahren nach Anspruch 1,
**dadurch gekennzeichnet ,**
**dass** das Gips-Filament zwischen 5% bis 50% Gips aufweist.

3. Verfahren nach Anspruch 1 oder 2,
**dadurch gekennzeichnet ,**
**dass** der Gips des Gips-Filament eine Körnung zwischen 0,01 mm und 0,05 mm aufweist.

4. Verfahren nach einem der Ansprüche 1 bis 3,
**dadurch gekennzeichnet ,**
**dass** das Gips-Filament Kunststoff, insbesondere PLA, PET und PET-G aufweist.

5. Verfahren nach einem der Ansprüche 1 bis 4,
**dadurch gekennzeichnet ,**
**dass** die minimale Schichthöhe bei der Aufbereitung des digitalen Datensatzes für das Fused Deposition Modeling Verfahren in dem 3D-Drucker 0,1 mm beträgt.

6. Verfahren nach einem der Ansprüche 1 bis 5,
**dadurch gekennzeichnet ,**
**dass** an dem digitalen Datensatz vor dem Aufbereiten für das Fused Deposition Modeling Verfahren in den 3D-Drucker eine Zahnverschiebung durchgeführt wird.

7. Verfahren nach einem der Ansprüche 1 bis 6,
**dadurch gekennzeichnet ,**
**dass** basierend auf dem digitalen Datensatz eine Sockelform von mehreren verschiedenen Sockelformen ausgewählt wird.

8. Verfahren nach Anspruch 7,
**dadurch gekennzeichnet ,**
**dass** das Fused Deposition Modeling Verfahren direkt auf einem Sockel ausgeführt wird oder der Sockel mit gedruckt wird.

9. 3D-Druckanlage zum Herstellen eines Kiefer-Zahn-Modelles zum Durchführen eines Verfahrens nach einem der Ansprüche 1 bis 8 mit
einer Recheneinheit, die ausgestaltet ist, einen digitale Datensatz zu einem Kiefer mit oder ohne Zähnen für ein Fused Deposition Modeling Verfahren in einem 3D-Drucker aufzubereiten, und
einem 3D-Drucker, der einen Düsendurchmesser zwischen 0,2 mm und 0,6 mm aufweist, zur Verwendung eines Gips-Filament ausgestaltet ist und der ausgebildet ist basierend auf dem aufbereiteten Datensatz ein Gipsmodell des Kiefer-Zahn-Modelles zu drucken.

## Claims

1. Method for producing a jaw-tooth-model,
wherein a digital dataset of a jaw with or without teeth is present,
wherein the digital dataset is prepared for a fused deposition modeling method in a 3D printer,
wherein the jaw-tooth-model is produced by means of fused deposition modeling using a 3D printer,
**characterized in that**
a plaster filament is used and
**in that** the nozzle diameter of a pressure nozzle of the 3D printer is chosen between 0.2 mm and 0.6 mm.

2. Method according to claim 1,
**characterized in that**
the plaster filament has plaster ranging between 5 % and 50 %.

3. Method according to claim 1 or 2,
**characterized in that**
the plaster of the plaster filament has a grain size ranging between 0.01 mm and 0.05 mm.

4. Method according to any one of claims 1 to 3,
**characterized in that**
the plaster filament has plastic material, in particular PLA, PET and PET-G.

5. Method according to any one of claims 1 to 4,
**characterized in that**
when preparing the digital dataset for the fused deposition modeling method in the 3D printer the minimum layer height amounts to 0.1 mm.

6. Method according to any one of claims 1 to 5,
**characterized in that**
prior to the preparation for the fused deposition modeling method in the 3D printer a tooth shifting is carried out on the digital dataset.

7. Method according to any one of claims 1 to 6,
**characterized in that**
based on the digital dataset a base shape is chosen from several different base shapes.

8. Method according to claim 7,
**characterized in that**
the fused deposition modeling method is carried out directly on a base or the base is also printed.

9. 3D printing system for producing a jaw-tooth-model for carrying out a method according to any one of claims 1 to 8 having
a computing unit which is configured to prepare a digital dataset of a jaw with or without teeth for a fused deposition modeling method in a 3D printer, and
a 3D printer which has a nozzle diameter ranging between 0.2 mm and 0.6 mm, is configured for the use of a plaster filament and, based on the prepared dataset, is designed to print a plaster model of the jaw-tooth-model.

## Revendications

1. Procédé pour fabriquer un modèle maxillo-dentaire
selon lequel on dispose d'un jeu de données numérique pour une mâchoire avec ou sans dents,
selon lequel le jeu de données numérique est créé pour un procédé de fused deposition modeling sur une imprimante 3D et
selon lequel le modèle maxillo-dentaire est fabriqué par fused deposition modeling au moyen d'une imprimante 3D, **caractérisé**
**en ce qu'**un filament de plâtre est utilisé et
que le diamètre de buse de la buse d'impression de l'imprimante 3D est choisi entre 0,2 mm et 0,6 mm.

2. Procédé selon la revendication 1,
**caractérisé**
**en ce que** le filament de plâtre contient entre 5% et 50% de plâtre.

3. Procédé selon la revendication 1 ou 2,
**caractérisé**
**en ce que** le plâtre du filament de plâtre présente une granulométrie comprise entre 0,1 mm et 0,05 mm.

4. Procédé selon une des revendications 1 à 3,
**caractérisé**
**en ce que** le filament de plâtre contient du plastique, en particulier du PLA, du PET et du PET-G.

5. Procédé selon une des revendications 1 à 4,
**caractérisé**
**en ce que** la hauteur de couche minimale lors de la création du jeu de données numérique pour le procédé de fused deposition modeling sur l'imprimante 3D est de 0,1 mm.

6. Procédé selon une des revendications 1 à 5,
**caractérisé**
**en ce qu'**un déplacement dentaire est effectué sur le jeu de données numérique avant la création pour le procédé de fused deposition modeling sur l'imprimante 3D.

7. Procédé selon une des revendications 1 à 6,
**caractérisé**
**en ce qu'**une forme de socle est choisie parmi plusieurs formes de socle différentes sur la base du jeu de données numérique.

8. Procédé selon la revendication 7,
**caractérisé**
**en ce que** le procédé de fused deposition modeling est appliqué sur un socle ou que le socle est imprimé avec celui-ci.

9. Installation d'impression en 3D pour fabriquer un modèle maxillo-dentaire pour appliquer un procédé selon une des revendications 1 à 8 avec
une unité de calcul qui est conçue pour créer un jeu de données numérique pour une mâchoire avec ou sans dents pour un procédé de fused deposition modeling sur une imprimante 3D et
une imprimante 3D qui possède un diamètre de buse compris entre 0,2 mm et 0,6 mm et qui est agencée pour utiliser un filament de plâtre et est configurée pour imprimer un modèle de plâtre du modèle maxillo-dentaire sur la base du jeu de données préparé.
